# EUROPEAN PATENT APPLICATION

(11) **EP 4 666 983 A1**
(43) Date of publication of application: **24.12.2025**
(21) Application number: 23917435.2
(22) Date of filing: 17.01.2023
(51) Int. Cl.: A61C 8/00

(54) **ABUTMENT SCREW REMOVAL TOOL AND SUPPORT TOOL**

(71) Applicant: Ikumi, Noriharu, Takasaki-shi, Gunma 370-0046 (JP)
(72) Inventor: Ikumi, Noriharu, Takasaki-shi, Gunma 370-0046 (JP)
(74) Representative: Schön, Christoph
(86) International application number: PCT/JP2023/001151
(87) International publication number: WO 2024/154221

(57) **Abstract**

The present invention comprises an engagement portion which is provided on a distal end side and engages with an end portion of a fractured abutment screw on a fractured surface side from the radially outside of the abutment screw and a shaft which is provided on a base end side with respect to the engagement portion and extends from the engagement portion in the axial direction. The engagement portion is formed into a tubular shape and an inner surface of the engagement portion engages with the end portion of the abutment screw on the fractured surface side. Moreover, a slit which extends from the distal end of the engagement portion toward the base end side in the axial direction and passes through the engagement portion in the radial direction is formed in the engagement portion.

## Description

### TECHNICAL FIELD

The present disclosure relates to an abutment screw removal tool and a support tool.

### BACKGROUND ART

Patent Literature 1 discloses an instrument used to remove a threaded base screwed into a dental implant.

### CONVENTIONAL ART DOCUMENT

### PATENT LITERATURE

[Patent Literature 1] Japanese Unexamined Patent Application Publication No. 2010-137052

### SUMMARY OF INVENTION

### TECHNICAL PROBLEM

In the instrument disclosed in Patent Literature 1, the upper end surface of a screw member is pressed by spike-like projections while torque is simultaneously applied to the instrument to rotate the screw member. However, since the diameter of the screw member is actually very small, it is difficult to apply sufficient torque to the screw member, and the threaded base cannot be easily removed.

Accordingly, in one aspect, the present disclosure aims to provide an abutment screw removal tool capable of easily removing an abutment screw by appropriately applying torque to the abutment screw.

### SOLUTION TO PROBLEM

In one aspect, an abutment screw removal tool is provided. The abutment screw removal tool comprising:
an engaging portion provided on a distal end side, the engaging portion engaging with a fractured abutment screw at a fractured surface side end thereof from a radially outer side of the abutment screw; and
a shaft provided on a proximal end side of the engaging portion and extending axially from the engaging portion.

### ADVANTAGEOUS EFFECT OF INVENTION

According to one aspect of the present disclosure, by appropriately applying torque to the abutment screw, the abutment screw can be easily removed.

### BRIEF DESCRIPTION OF DRAWINGS

FIG. 1 is a diagram showing the configuration of the abutment screw removal tool of the present embodiment.
FIG. 1A is a view of the abutment screw removal tool of FIG. 1 as seen from below.
FIG. 1B is a diagram showing the state in which the abutment screw removal tool is attached to a dental low-speed engine.
FIG. 1C is a diagram showing an example in which the shape of the proximal end side of the shaft is adapted to the dental low-speed engine.
FIG. 2 is a sectional view showing the configuration of a dental implant.
FIG. 2A is a sectional view showing a state in which the abutment screw has fractured.
FIGS. 2B is a sectional view showing a method of using the abutment screw removal tool of the present embodiment.
FIGS. 2C is a sectional view showing a method of using the abutment screw removal tool of the present embodiment.
FIGS. 2D is a sectional view showing a method of using the abutment screw removal tool of the present embodiment.
FIGS. 2E is a sectional view showing a method of using the abutment screw removal tool of the present embodiment.
FIG. 3 shows another example of the engaging portion.
FIG. 4 shows another example of the engaging portion.

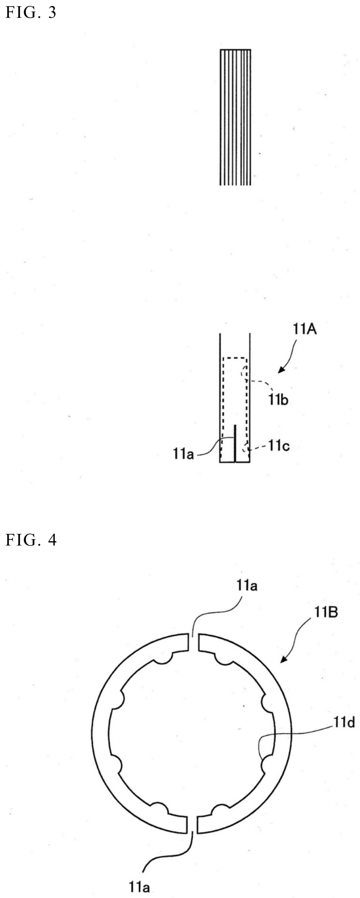

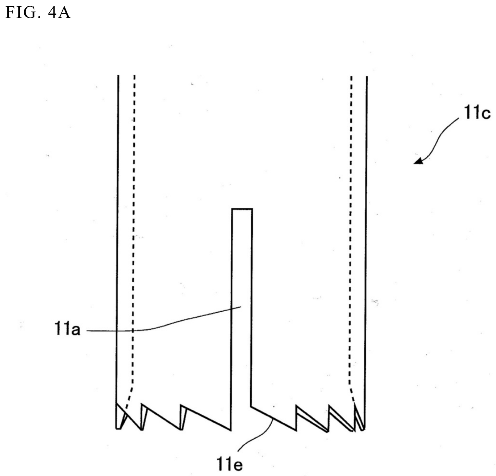

FIG. 4 shows another example of the engaging portion.

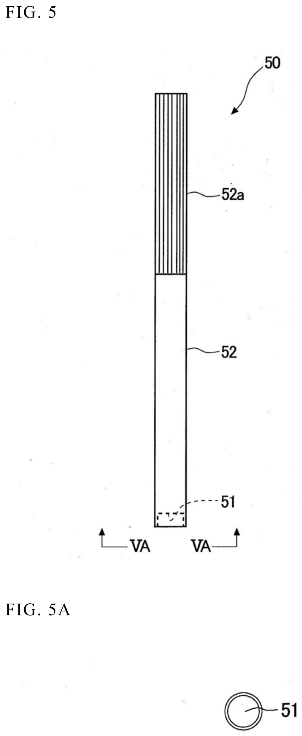

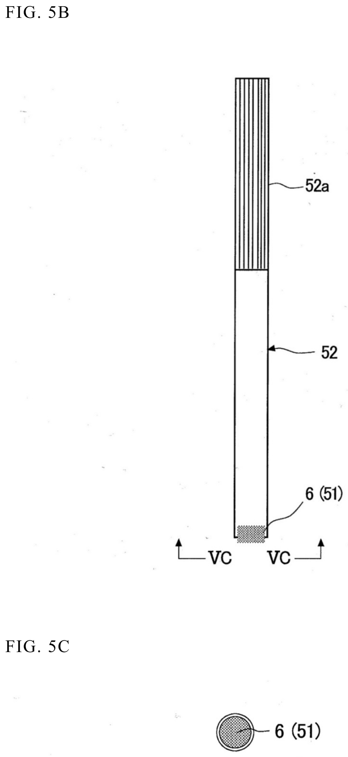

FIG. 5 is a diagram showing the configuration of a support tool usable in combination with the abutment screw removal tool.
FIG. 5A is a view of the support tool of FIG. 5 as seen from below.
FIG. 5B is a diagram showing a state in which an adhesive member is attached to the support tool.
FIG. 5C is a view of the support tool and the adhesive member of FIG. 5B as seen from below.

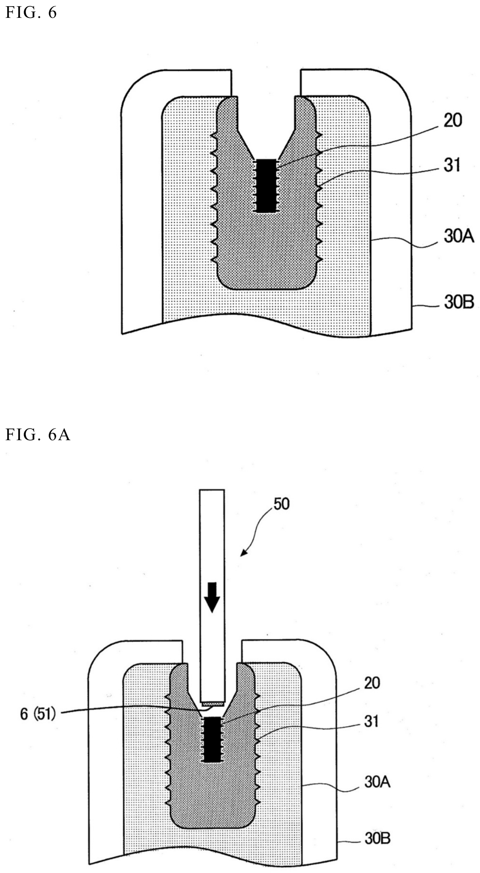

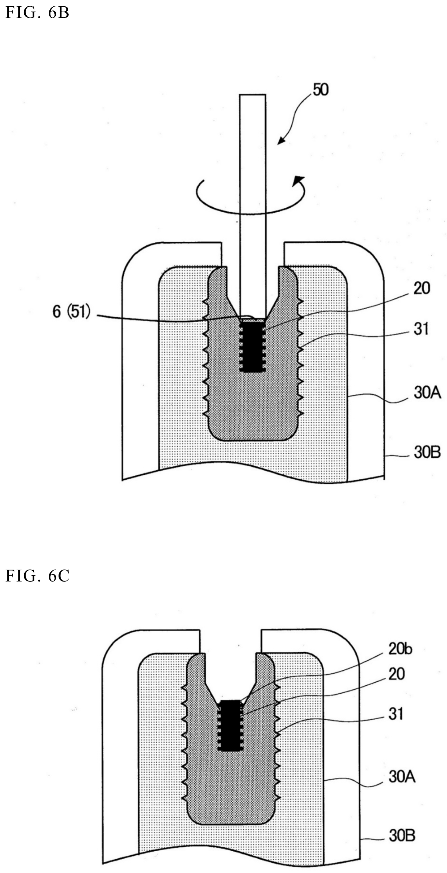

FIG. 6 is a sectional view showing a method of using the support tool.
FIG. 6A is a sectional view showing a method of using the support tool.
FIG. 6B is a sectional view showing a method of using the support tool.
FIG. 6C is a sectional view showing a method of using the support tool.

### DESCRIPTION OF EMBODIMENT

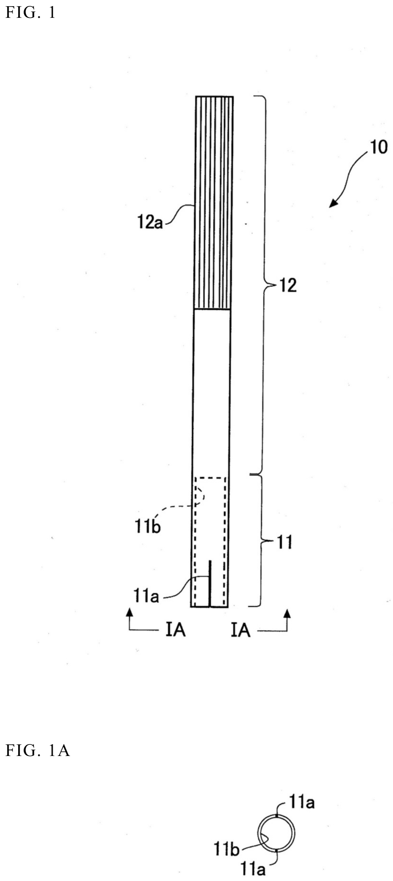

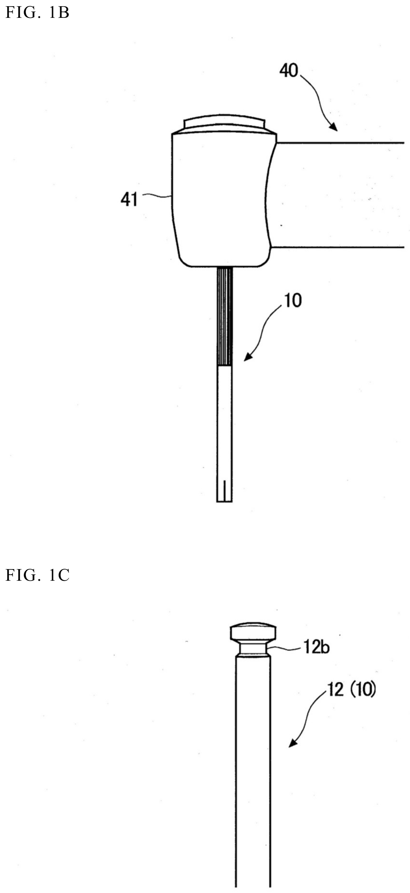

FIG. 1 is a diagram showing the configuration of the abutment screw removal tool of the present embodiment.

FIG. 1A is a view of the abutment screw removal tool of FIG. 1 as seen from below (in the direction of line IA-IA).

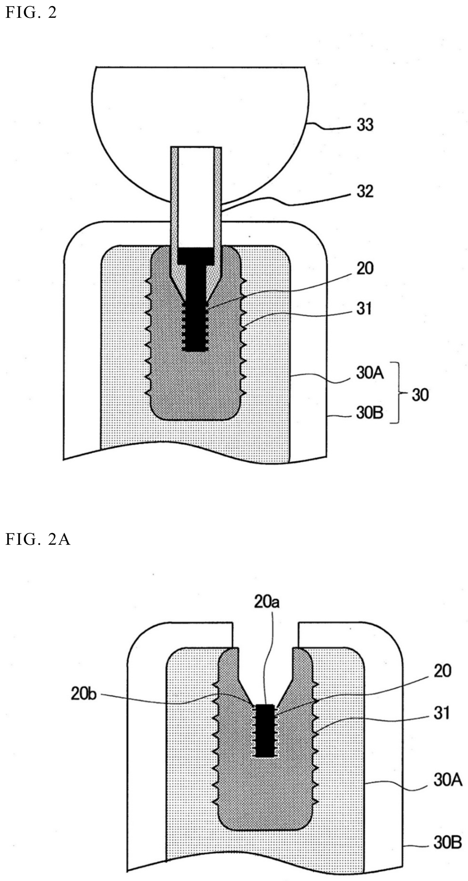

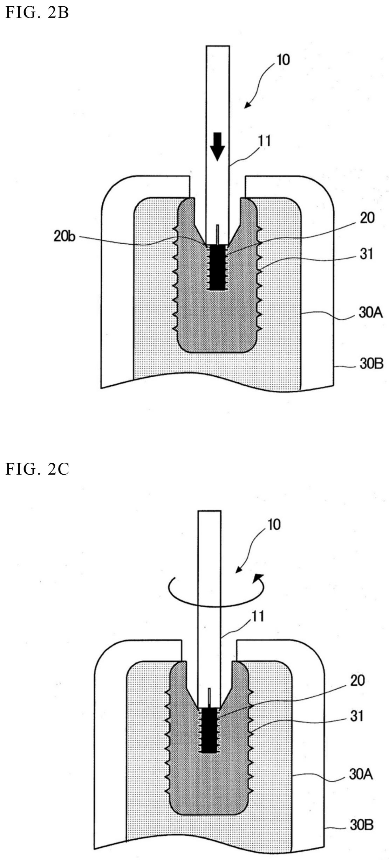

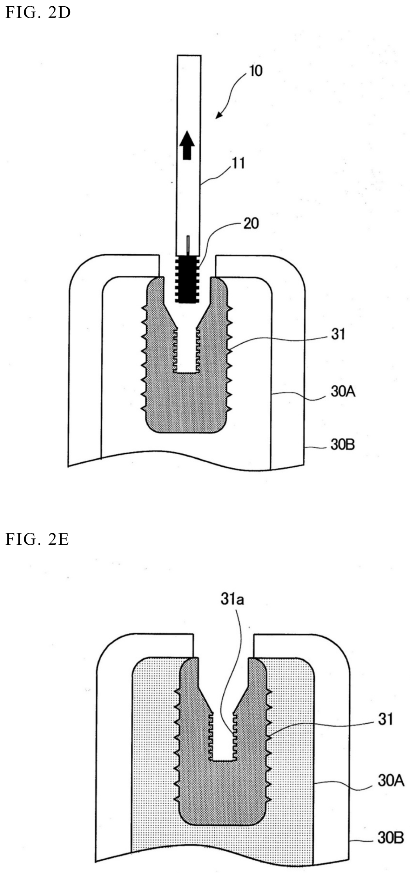

FIG. 2 is a sectional view showing the configuration of a dental implant.

FIG. 2A shows a state in which an abutment screw has fractured.

FIGS. 2B to 2E show methods of using the abutment screw removal tool of the present embodiment.

As shown in FIG. 1, the abutment screw removal tool 10 of the present embodiment includes an engaging portion 11 and a shaft 12.

As shown in FIG. 1, the engaging portion 11 is provided on the distal end side (the lower side in FIG. 1) of the abutment screw removal tool 10 in the axial direction (vertical direction in FIG. 1). The engaging portion 11 engages with the fractured surface side end of a fractured abutment screw 20 (see FIGS. 2 to 2D) from the radially outer side of the abutment screw 20. The shaft 12 is provided on the proximal end side (the upper side in FIG. 1), with respect to the engaging portion 11, of the abutment screw removal tool 10 in the axial direction and extends axially from the engaging portion 11. The material of the abutment screw removal tool 10 is not particularly limited; for example, a metal material having no harmful effect on a living body and having appropriate elasticity, strength, and frictional force is preferably used.

As shown in FIGS. 1 and 1A, the engaging portion 11 is formed into a cylindrical shape having an inner surface 11b. The engaging portion 11 is formed with a pair of slits 11a that extend axially from the distal end (lower end in FIG. 1) toward the proximal end side and penetrate the cylindrical engaging portion 11 in the radial direction. As shown in FIGS. 1 and 1A, the pair of slits 11a are symmetrically provided with respect to the central axis of the abutment screw removal tool 10. The pair of slits 11a function to allow the distal end of the engaging portion 11 to elastically open easily during use of the abutment screw removal tool 10.

The number of slits 11a is not limited; three or more slits 11a may be provided circumferentially around the engaging portion 11. In this case, it is preferable that the plurality of slits 11a be arranged at equal intervals in the circumferential direction of the engaging portion 11.

An operation portion 12a is provided on the proximal end side of the shaft 12. As shown in FIG. 1, the surface of the operation portion 12a is formed with an uneven shape for slip prevention, which facilitates manual rotation or engagement with a dental low-speed engine.

FIG. 1B shows the state in which the abutment screw removal tool is attached to a dental low-speed engine. As shown in FIG. 1B, the operation portion 12a is inserted into the attachment portion 41 of the dental low-speed engine 40, and the attachment portion is tightened, and thereby the abutment screw removal tool 10 is mounted to the dental low-speed engine 40. When using the dental low-speed engine 40, the proximal end side of the shaft 12 may be formed into a shape different from the operation portion 12a so as to fit the attachment portion 41 of the dental low-speed engine 40.

FIG. 1C shows an example in which the proximal end side of the shaft is shaped to fit the dental low-speed engine. In the example of FIG. 1C, a small-diameter portion 12b having a smaller diameter than other portions is formed on the proximal end side of the shaft 12. In this state, the abutment screw removal tool 10 is mounted to the dental low-speed engine 40 such that the small-diameter portion 12b engages with the attachment portion 41 of the dental low-speed engine 40.

Next, the method for using the abutment screw removal tool 10 will be described.

As shown in FIG. 2, a dental implant includes an implant body 31 that is screwed into a bone-gingiva portion 30 comprising a bone portion 30A and a gingiva portion 30B, and a tubular abutment 32 to which an artificial tooth 33 is attached. A female thread 31a (FIG. 2E) is formed in the implant body 31, and the abutment 32 is fixed to the implant body 31 by screwing an abutment screw 20 that passes through the abutment 32 into the female thread 31a.

FIG. 2A shows a state in which the abutment screw 20 has fractured.

When mechanical overload is applied to the abutment 32, the abutment screw 20 may fracture. As shown in FIG. 2A, the fractured surface 20a of the abutment screw 20 is generally located inside the implant body 31, making removal of the fractured screw 20 difficult. Conventionally, this has often caused clinical problems.

Specific causes of such clinical problems include cases in which the implant is located beneath the mucous membrane, making it difficult to visually recognize the fractured abutment screw 20. Furthermore, since the diameter of the fractured abutment screw 20 is small (for example, about 1 mm), there has been no effective method for applying counterclockwise rotational torque. If mechanical damage occurs inside the implant body 31 during removal of the fractured abutment screw 20, replacement with a new abutment screw 20 becomes impossible, and the implant body 31 becomes unusable. By using the abutment screw removal tool 10 of the present embodiment, these problems can be solved.

FIGS. 2B to 2E illustrate a procedure for removing the fractured abutment screw 20 by means of the abutment screw removal tool 10. When removing the abutment screw 20, first, as shown in FIG. 2B, the abutment screw removal tool 10 is moved in the axial direction (downward in FIG. 2B). Next, as shown in FIG. 2C, an end portion on the fractured surface 20a side of the abutment screw 20 is inserted into the distal end (the lower end in FIG. 2B) of the engaging portion 11. At this time, the engaging portion 11 is in a state accompanied by elastic deformation in the direction in which its distal end opens, and the inner surface 11b of the engaging portion 11 comes into contact with the side surface 20b (FIGS. 2A and 2B) of the abutment screw 20. Accordingly, due to the elastic force of the engaging portion 11, the side surface 20b of the abutment screw 20 is pressed by the engaging portion 11 from the radially outer side. Since the abutment screw 20 is pressed by the engaging portion 11 from the radially outer side via the side surface 20b, the abutment screw 20 is held by the abutment screw removal tool 10 through the frictional force between the side surface 20b and the inner surface 11b (FIGS. 1 and 1A). In this manner, the abutment screw removal tool 10 holds the abutment screw 20 by means of elastic force and frictional force.

Next, as shown in FIGS. 2C to 2E, when the abutment screw removal tool 10 is rotated about its axis in a predetermined direction (for example, in a counterclockwise direction when viewed from the proximal side) by means of the dental low-speed engine 40 (FIG. 1B) or by fingers (FIG. 2C), the abutment screw 20 also rotates in the same direction. Accordingly, the abutment screw 20 moves together with the abutment screw removal tool 10 toward the proximal end side in the axial direction. When the threaded engagement between the abutment screw 20 and the implant body 31 is completely released, the abutment screw 20 is removed from the implant body 31 (FIGS. 2D to 2E).

As described above, in this embodiment, the abutment screw 20 is pressed by the engaging portion 11 from the radially outer side through the side surface 20b by means of the elastic force of the engaging portion 11, and is held by the frictional force between the side surface 20b and the inner surface 11b (FIGS. 1 and 1A). Accordingly, it is possible to apply to the abutment screw 20 a torque sufficient to rotate the abutment screw 20 through the operation via the abutment screw removal tool 10. Therefore, the abutment screw 20 can be easily removed from the implant body 31.

Meanwhile, in the device disclosed in Patent Literature 1 (Japanese Unexamined Patent Application Publication No. 2010-137052), the upper end surface of the screw member is pressed with thorn-like spikes while torque is simultaneously applied to the device, thereby attempting to rotate the screw member. However, the diameter of the abutment screw 20 is very small, and typically, the abutment screw 20 is made of a hard material such as a titanium alloy. Accordingly, it is difficult for the thorn-like spikes to bite into the fractured surface 20a, making it hard to apply sufficient torque to rotate the abutment screw 20. Furthermore, while pressing the thorn-like spikes more strongly may increase the frictional force at the fractured surface 20a, thereby increasing the torque that can be transmitted to the abutment screw 20, this simultaneously pushes the abutment screw 20 axially into the implant body 31 with a large force, which increases the friction between the two components. In other words, as the friction between the abutment screw 20 and the implant body 31 increases, the torque required to rotate the abutment screw 20 also increases. Therefore, even if the abutment screw 20 is strongly pressed and rotated with the thorn-like spikes, a counteracting torque caused by friction with the implant body 31 is applied to the abutment screw 20, making it likely that the abutment screw 20 cannot be rotated after all. Moreover, excessive pressing of the thorn-like spikes against the abutment screw 20 may also risk damaging the implant body 31.

In contrast, according to the abutment screw removal tool 10 of the present embodiment, the engagement portion 11 engages with the side surface 20b of the abutment screw 20. Therefore, it is possible to maintain a low frictional force between the abutment screw 20 and the implant body 31 without applying a strong axial force to the abutment screw 20. As a result, even a small torque applied to the abutment screw 20 allows the abutment screw 20 to rotate and be removed. That is, according to the abutment screw removal tool 10, it is easy to apply the torque necessary to remove the abutment screw 20. Thus, the aforementioned problems can be avoided.

FIGS. 3, 4, and 4A illustrate other configurations of the engagement portion.

In the example shown in FIG. 3, instead of the engagement portion 11, an engagement portion 11A having a tip portion with a tapered cross-section is formed.

As shown in FIG. 3, the engagement portion 11A has a tapered surface 11c that continues from the inner surface 11b. The tapered surface 11c is shaped such that the inner diameter of the engagement portion 11A increases toward its distal end (the lower end in FIG. 3). In this case, during the insertion of the abutment screw 20 into the engagement portion 11A (see FIGS. 2B to 2C), the tapered surface 11c serves as a guide to align the abutment screw 20, allowing easy engagement of the engagement portion 11A with the abutment screw 20. In addition, the allowable range for differences in the diameter of the abutment screw 20 can be expanded. Specifically, the diameter of the abutment screw 20 varies slightly depending on the manufacturer or type of dental implant. Therefore, to accommodate multiple diameters, it would normally be necessary to prepare several abutment screw removal tools 10 with engagement portions 11 (or 11A) having different inner diameters. However, by forming the tapered surface 11c in the engagement portion 11A, differences in the diameter of the abutment screw 20 can be partially absorbed by the insertion depth into the engagement portion 11A. Consequently, the operability during insertion of the abutment screw 20 into the engagement portion 11A can be improved, and the number of abutment screw removal tools 10 with different inner diameters can be reduced. For example, the interval between inner diameters of the abutment screw removal tools 10 that need to be prepared can be increased.

In the example shown in FIG. 4, instead of the circular tapered surface 11c (FIG. 3) in a cross section orthogonal to the axial direction, an engagement portion 11B having an uneven surface 11d with radial irregularities in that cross section is provided. By forming such an uneven surface 11d, the frictional force between the abutment screw 20 and the engagement portion 11B can be increased. That is, the fractured surface 20a is usually not a smooth plane; irregularities are often present along its edge. Thus, by allowing these irregularities to interlock with the uneven surface 11d, the frictional force between the abutment screw 20 and the engagement portion 11B increases, making it easier to apply torque to the abutment screw 20. Furthermore, as with the tapered surface 11c (FIG. 3), if the overall inner diameter of the uneven surface 11d is shaped to increase toward the distal end (the lower end in FIG. 3), the same effects as the tapered surface 11c can be obtained.

In the example shown in FIG. 4A, the engagement portion 11C has a wave-shaped configuration at its tip portion, with a plurality of circumferentially arranged spikes 11e. In the example shown in FIG. 4A, a tapered surface similar to the tapered surface 11c (FIG. 3) is formed at the tip portion of the engagement portion 11C, and the spikes 11e are formed in the region of the tapered surface. In this case, the tip of the spike 11e can be pressed against the fractured end (fractured surface 20a) of the abutment screw 20, allowing the abutment screw 20 to be gradually rotated. Then, by slightly moving the fractured end upward and bringing the fractured end of the abutment screw 20 into a state where it is gripped from the side, torque can be applied to remove the abutment screw 20. Therefore, as in the case where a support tool 50 (described later) is used, this configuration can also be applied when the side surface 20b of the abutment screw 20 is not sufficiently exposed.

As shown in FIGS. 3, 4, and 4A, the abutment screw removal tool 10 having the engaging portions 11A to 11C can also be rotated by a dental low-speed engine. In this case, as shown in FIG. 1C, the shape of the proximal end side of the shaft 12 may be adapted to fit the dental low-speed engine.

The inner surface 11b of the engaging portion 11, the tapered surface 11c of the engaging portion 11A, or the uneven surface 11d of the engaging portion 11B may be formed as a rough surface by sandblasting or the like. By forming these surfaces as rough surfaces, the frictional force between the abutment screw 20 and the engaging portions 11A, 11B, and 11C can be further increased.

Next, a support tool 50 that can be used in combination with the abutment screw removal tool 10 will be described.

FIG. 5 is a diagram showing the structure of the support tool that can be used in combination with the abutment screw removal tool; FIG. 5A is a diagram showing the support tool viewed from below (in the VA-VA line direction) of FIG. 5; FIG. 5B is a diagram showing a state in which an adhesive member is attached to the support tool; and FIG. 5C is a diagram showing the support tool and the adhesive member viewed from below (in the VC-VC line direction) of FIG. 5B.

As shown in FIGS. 5 and 5A, the support tool 50 includes an attachment portion 51 provided on the distal end side (the lower end side in FIG. 5), to which an adhesive member 6 (FIG. 5A) that is fixed by adhesion to the fractured surface 20a of the abutment screw 20 can be attached; and a shaft 52 provided on the proximal end side (the upper end side in FIG. 5) of the attachment portion 51 and extending in the axial direction (vertical direction in FIG. 5) from the attachment portion 51. The material of the support tool 50 is not particularly limited; for example, a metal material having no harmful effect on the human body and sufficient strength may be used as the material of the support tool 50.

As shown in FIGS. 5 and 5A, the attachment portion 51 has a cylindrical shape recessed from the distal end of the support tool 50 toward the proximal end side. As shown in FIGS. 5B and 5C, a cylindrical adhesive member 6 is attached in this cylindrical recess. The adhesive member 6 can be replaced each time the support tool 50 is used.

The adhesive member 6 may comprise, for example, a base sheet and adhesive layers disposed on both sides of the base sheet, similar to double-sided adhesive tape. Alternatively, the adhesive member 6 may comprise an adhesive substance molded into a cylindrical shape. The adhesive member 6 is fixed to the attachment portion 51 by its own adhesiveness.

As shown in FIG. 5, an operation portion 52a is provided on the proximal end side of the shaft 52. The surface of the operation portion 52a is formed with an uneven shape serving as an anti-slip structure to facilitate manual rotation or other operations by fingers.

Next, a description will be given of the use method of the support tool 50.

FIGS. 6 to 6C are sectional views illustrating a method of using the support tool.

FIG. 6 shows an example in which the abutment screw 20 is fractured near a female screw 31a (FIG. 2E) of an implant body 31, and the fracture surface 20a remains near the region where the female screw 31a is formed. In such a case, since the side surface 20b (FIGS. 2A, 2B, and 6C) of the abutment screw 20 is not exposed, the abutment screw 20 cannot be held by the abutment screw removal tool 10.

In such a case, as shown in FIGS. 6A to 6B, the support tool 50, in which an adhesive member 6 is attached to the attachment portion 51, is inserted into the interior of the implant body 31, and the adhesive member 6 is pressed against the fracture surface 20a. Thus, the support tool 50 is fixed to the abutment screw 20 through the adhesive member 6.

Next, as shown in FIG. 6B, when the support tool 50 is rotated around its axis in a predetermined direction (for example, counterclockwise when viewed from the proximal end side), the abutment screw 20 also rotates in the same direction, and the abutment screw 20 moves in the axial proximal end side together with the abutment screw removal tool 10. When the abutment screw 20 is rotated to some extent, as shown in FIG. 6C, the side surface 20b of the abutment screw 20 becomes exposed, separated from the region where the female screw 31a is formed. In this state, the side surface 20b of the abutment screw 20 can be clamped by the engaging portion 11 of the abutment screw removal tool 10. Accordingly, the fractured abutment screw 20 can subsequently be removed from the implant body 31 by the procedure shown in FIGS. 2B to 2E.

As described above, in this embodiment, torque is transmitted from the support tool 50 to the abutment screw 20 through the adhesive member 6. In this case, when the adhesive member 6 is fixed to the fracture surface 20a, it is necessary to press the support tool 50 against the abutment screw 20 with a certain degree of force. However, once the adhesive member 6 is fixed to the fracture surface 20a, only torque around the axis can be applied to the abutment screw 20 without applying axial force. Accordingly, frictional force generated between the abutment screw 20 and the implant body 31 can be suppressed, and the abutment screw 20 can be rotated with a small torque. That is, by the adhesive force (tackiness) of the adhesive member 6, it is possible to apply to the abutment screw 20 a torque sufficient to rotate the abutment screw 20.

As described above, according to the abutment screw removal tool 10 of the present embodiment, an appropriate torque (a torque necessary for rotation) can be applied to the abutment screw 20 through the side surface 20b of the abutment screw 20, whereby the abutment screw 20 can be easily removed. In addition, when the side surface 20b of the abutment screw 20 is not exposed, the side surface 20b of the abutment screw 20 can be exposed by rotating the abutment screw 20 using the support tool 50. Therefore, even in this case, the abutment screw 20 can be easily removed by the abutment screw removal tool 10 of the present embodiment.

Although each embodiment has been described in detail above, the invention is not limited to the specific embodiments and may be modified and changed in various ways within the scope described in the claims. In addition, it is also possible to combine all or several of the constituent elements of the embodiments described above.

### [DESCRIPTION OF REFERENCE NUMERALS]

10: Abutment screw removal tool
11, 11A, 11B, 11C: Engaging portion
11a: Slit
11b: Inner surface
11c: Taper surface (inner surface)
11d: Uneven surface (inner surface)
11e: Spike
12: Shaft
12a: Operation portion
20: Abutment screw
20a: Fracture surface
20b: Side surface
50: Support tool

## Claims

1. An abutment screw removal tool comprising:
an engaging portion, provided on a distal end side, which engages with a fractured end face side end portion of a fractured abutment screw from a radially outer side of the abutment screw; and
a shaft provided on a proximal end side of the engaging portion and extending axially from the engaging portion.

2. The abutment screw removal tool according to claim 1,
wherein the engaging portion is formed in a tubular shape, and an inner surface of the engaging portion engages with the fractured end face side end portion of the abutment screw.

3. The abutment screw removal tool according to claim 2,
wherein the engaging portion is formed with a slit extending in an axial direction from a distal end of the engaging portion toward the proximal end side, the slit penetrating in a radial direction of the engaging portion.

4. The abutment screw removal tool according to claim 2,
wherein the engaging portion has a tapered shape in which an inner diameter of the inner surface increases from the proximal end side toward the distal end side.

5. The abutment screw removal tool according to claim 2,
wherein the inner surface of the engaging portion is formed with an uneven surface having unevenness in a cross section perpendicular to the axial direction and along a radial direction.

6. The abutment screw removal tool according to claim 2,
wherein the inner surface of the engaging portion is a rough surface.

7. A support tool usable in combination with any one of the abutment screw removal tools according to claims 1 to 6, comprising:
a mounting portion provided on a distal end side, the mounting portion being attachable with an adhesive member that is fixed by adhesion to a fractured end face of the abutment screw; and
a shaft provided on a proximal end side of the mounting portion and extending axially from the mounting portion.
